(19) Europäisches Patentamt
European Patent Office
Office européen des brevets

(11) **EP 4 067 181 B1**

(12) **EUROPEAN PATENT SPECIFICATION**

(45) Date of publication and mention
of the grant of the patent:
**07.05.2025 Bulletin 2025/19**

(21) Application number: **22159361.9**

(22) Date of filing: **01.03.2022**

(51) International Patent Classification (IPC):
**B60T 7/10** (2006.01) **B60T 13/74** (2006.01)
**B60T 7/04** (2006.01) **B60T 17/22** (2006.01)

(52) Cooperative Patent Classification (CPC):
**B60T 7/107; B60T 7/045; B60T 13/741;**
**B60T 17/221;** B60T 2270/82

(54) **BRAKE DEVICE, METHOD FOR CALCULATING WEAR AMOUNT, AND PROGRAM FOR CALCULATING WEAR AMOUNT**

BREMSVORRICHTUNG, VERFAHREN ZUR BERECHNUNG DER VERSCHLEISSMENGE UND PROGRAMM ZUR BERECHNUNG DER VERSCHLEISSMENGE

DISPOSITIF DE FREINAGE, PROCÉDÉ DE CALCUL DE QUANTITÉ D'USURE ET PROGRAMME DE CALCUL DE QUANTITÉ D'USURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2021 JP 2021057764**

(43) Date of publication of application:
**05.10.2022 Bulletin 2022/40**

(73) Proprietor: **Nabtesco Corporation
Tokyo 102-0093 (JP)**

(72) Inventor: **Kigami, Shogo
Chiyoda-ku, Tokyo (JP)**

(74) Representative: **Grünecker Patent- und
Rechtsanwälte
PartG mbB
Leopoldstraße 4
80802 München (DE)**

(56) References cited:
JP-A- 2015 021 508 JP-A- 2016 088 212
KR-A- 20090 119 486 US-A1- 2011 278 105
US-A1- 2017 276 199 US-A1- 2020 166 096

## Description

TECHNICAL FIELD

The present invention relates to a brake device, a method for calculating a wear amount and a program for calculating a wear amount.

BACKGROUND

Patent Literature 1 discloses an electric brake device for applying a brake to a vehicle by using motor as a power source to press a brake block against a disc rotating integrally with the wheel.

Patent Literature 2 discloses an electronic parking brake system for controlling the activation or deactivation of the electronic parking brake and a control method.

RELEVANT REFERENCES

LIST OF RELEVANT PATENT LITERATURE

Patent Literature 1: Japanese Patent Application Publication No. 2008-19893
Patent Literature 2: US Application Publication US2020/166096.

SUMMARY

The electric brake device disclosed in Patent Literature 1 repeatedly performs the braking operation by pressing the brake block against the disc. This may cause friction between the brake block and the disc, as a result of which the brake block may wear out. If the brake block wears out beyond a predetermined amount, it needs to be replaced. To this end, brake devices using motors or other electric actuators as a drive source require that the wear amount of frictional members such as brake blocks be calculated. This issue arises not only in disc brakes but also in tread brakes, where frictional members are configured to be brought into contact with the tread surface of wheels.

To solve the above-described problems, a brake device is configured to apply a brake to a vehicle provided with a target member by using an electric actuator to drive a frictional member so that the frictional member is pressed against the target member. The brake device includes an acquiring unit for acquiring driving information regarding driving of the electric actuator, a travel distance calculating unit for, based on the acquired driving information, calculating a travel distance by which the frictional member travels to touch the target member, and a wear amount calculating unit for calculating a wear amount of the frictional member based on a currently calculated value of the travel distance and an old value of the travel distance.

As the frictional member, which is driven by the electric actuator, wears out, the frictional member must travel longer before touching the target member. With the above-described features, the driving information regarding the driving of the electric actuator is used to calculate the travel distance by which the frictional member travels to touch the target member. In this manner, the wear amount of the frictional member can be calculated based on the difference between the currently calculated value of the travel distance and an old value of the travel distance of the frictional member.

The above-described brake device preferably includes a sensor for detecting whether the frictional member is placed at a reference position for the travel distance of the frictional member. The acquiring unit preferably acquires detected information from the sensor, and the travel distance calculating unit preferably calculates a travel distance by which the frictional member travels from the reference position detected by the sensor to a position where the frictional member touches the target member.

In the above-described brake device, the reference position is preferably a fully opened position where the frictional member is the farthest away from the target member. In the above-described brake device, the travel distance calculating unit preferably calculates the travel distance of the frictional member based on at least one of a product of a duration and a current flowing through the electric actuator or a rotational rate of the electric actuator.

The above-described brake device preferably includes a target member wear amount acquiring unit for acquiring a wear amount of the target member. The wear amount calculating unit preferably takes the acquired wear amount of the target member into consideration in calculating the wear amount of the frictional member.

According to the invention, the above-described brake device includes a control unit for controlling driving of the electric actuator. The control unit controls the driving of the electric actuator such that the frictional member travels to a position that is at a predetermined distance from the position where the frictional member touches the target member.

According to the invention, in the above-described brake device, when the wear amount of the frictional member is greater than a wear amount of a frictional member of another brake device provided on another vehicle making up a same train, the control unit adjusts a braking force such that the braking force is less than a braking force of the other brake device.

In the above-described brake device, when the frictional member is newly mounted as a replacement, the brake device drives the frictional member so that the frictional member travels to touch the target member and acquires a travel distance by which the frictional member travels, and the acquired travel distance is used as the old value of the travel distance in calculating the wear amount.

The above-described brake device preferably includes an informing unit for issuing information when the wear amount of the frictional member becomes equal to or greater than a predetermined value. To solve the above-described problems, a method for calculating a wear amount of a frictional member of a brake device is provided. The brake device is configured to apply a brake to a vehicle provided with a target member by using an electric actuator to drive a frictional member so that the frictional member is pressed against the target member. The method includes steps of acquiring driving information regarding driving of the electric actuator, based on the acquired driving information, calculating a travel distance by which the frictional member travels to touch the target member, and calculating a wear amount of the frictional member based on a currently calculated value of the travel distance and an old value of the travel distance, and controlling driving of the electric actuator, wherein the control unit controls the driving of the electric actuator such that the frictional member travels to a position that is at a predetermined distance from the position where the frictional member touches the target member, and wherein, when the wear amount of the frictional member is greater than a wear amount of a frictional member of another brake device provided on another vehicle making up a same train, the control unit adjusts a braking force such that the braking force is less than a braking force of the other brake device.

As the frictional member, which is driven by the electric actuator, wears out, the frictional member must travel longer before touching the target member. According to the above-described method, the driving information regarding the driving of the electric actuator is used to calculate the travel distance by which the frictional member travels to touch the target member. In this manner, the wear amount of the frictional member can be calculated based on the difference between the currently calculated value of the travel distance and an old value of the travel distance of the frictional member.

To solve the above-described problems, a program for calculating a wear amount of a frictional member of a brake device is provided. The brake device is configured to apply a brake to a vehicle provided with a target member by using an electric actuator to drive a frictional member so that the frictional member is pressed against the target member. The program causes a computer to perform steps of acquiring driving information regarding driving of the electric actuator, based on the acquired driving information, calculating a travel distance by which the frictional member travels to touch the target member, and calculating a wear amount of the frictional member based on a currently calculated value of the travel distance and an old value of the travel distance, and controlling driving of the electric actuator, wherein the control unit controls the driving of the electric actuator such that the frictional member travels to a position that is at a predetermined distance from the position where the frictional member touches the target member, and wherein, when the wear amount of the frictional member is greater than a wear amount of a frictional member of another brake device provided on another vehicle making up a same train, the control unit adjusts a braking force such that the braking force is less than a braking force of the other brake device.

As the frictional member, which is driven by the electric actuator, wears out, the frictional member must travel longer before touching the target member. According to the above-described program, the driving information regarding the driving of the electric actuator is used to calculate the travel distance by which the frictional member travels to touch the target member. In this manner, the wear amount of the frictional member can be calculated based on the difference between the currently calculated value of the travel distance and an old value of the travel distance.

ADVANTAGEOUS EFFECTS

According to the present invention, the wear amount of the frictional member can be calculated.

BRIEF DESCRIPTION OF THE DRAWINGS

Fig. 1 is a schematic view showing the configuration of a brake device relating to a first embodiment
Fig. 2 is a flow chart showing how the brake device relating to the first embodiment works.
Fig. 3 is a flow chart showing how the brake device relating to the first embodiment works.
Fig. 4 is a schematic view showing the configuration of a brake device relating to a second embodiment.

DESCRIPTION OF THE PREFERRED EMBODIMENTS

<First Embodiment>

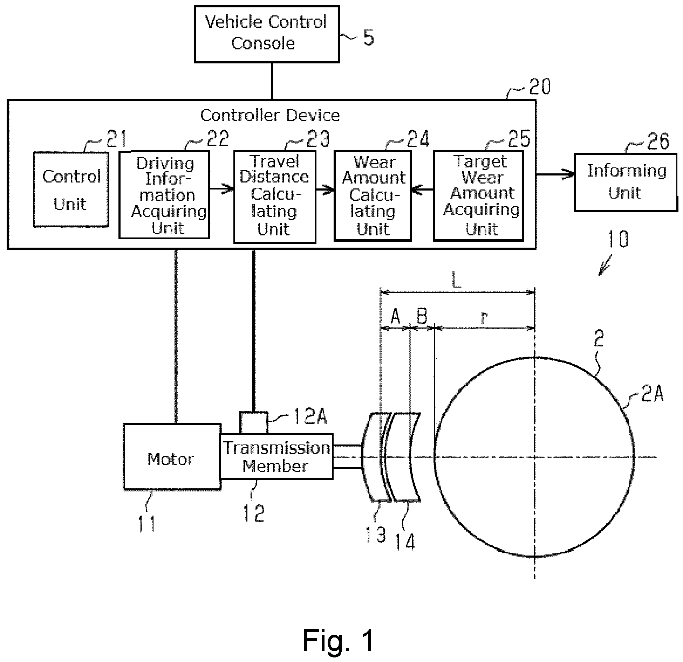

With reference to Figs. 1 to 3, the following describes a brake device relating to a first embodiment. The brake device is provided in a railroad vehicle.

As shown in Fig. 1, a brake device 10 is a tread brake for generating a braking force by pressing a brake block 14 against a tread surface 2A of a wheel 2 of a railroad vehicle. The brake device 10 includes a rotating motor 11 and is driven by the motor 11. The brake device 10 includes a transmission member 12 and a brake block retainer 13. The transmission member 12 is configured to transmit the driving force produced by the motor 11. The transmission member 12 uses the driving force from the motor 11 to displace the brake block retainer 13 in the radial direction of the wheel 2. The brake block 14 is attached onto the brake block retainer 13. The brake block 14 is displaced as the brake block retainer 13 is displaced, so that the brake block 14 is pressed against the tread surface 2A of the wheel 2. As pressed against the tread surface 2A of the wheel 2, the brake block 14 wars out. As a result, the brake block 14 becomes thinner. Here, the motor 11 is equivalent to an electric actuator. The wheel 2 is equivalent to a target member, and the brake block 14 is equivalent to the frictional member.

The brake device 10 is controlled by a controller device 20. The controller device 20 may be formed of one or more processors that perform various processes in accordance with computer programs (software). The processes to be executed by the controller device 20 or processors include a method for calculating a wear amount. The wear amount calculation method includes a procedure for calculating a wear amount, described below. The controller device 20 may be formed of one or more dedicated hardware circuits such as application-specific integrated circuits (ASICs) that perform at least a part of the various processes, or it may be formed of circuitry including a combination of such circuits. The processors include a CPU and a memory such as a RAM or ROM. The memory stores program codes or instructions configured to cause the CPU to perform processes. The memory, or a computer-readable medium, encompasses any kind of available media accessible via a general-purpose or dedicated computer. The programs stored in the computer-readable medium include a program for calculating a wear amount. The wear amount calculation program causes the computer to execute steps of acquiring, calculating a travel distance and calculating a wear amount.

The controller device 20 controls the braking force based on a braking command from a vehicle control console 5. The controller device 20 includes a control unit 21 for controlling the brake device 10. The control unit 21 controls driving of the motor 11 such that a necessary braking force is produced. The control unit 21 controls driving of the motor 11 such that the brake block 14 can move to a position at a predetermined distance away from a position where it can touch the tread surface 2A of the wheel 2. In this way, the brake block 14 can touch the tread surface 2A of the wheel 2 and the braking can start within a constant period of time. The transmission member 12 is provided with a sensor 12A for detecting whether the brake block 14 is positioned at a reference position for the travel distance of the brake block 14.

The controller device 20 includes a driving information acquiring unit 22, a travel distance calculating unit 23, and a wear amount calculating unit 24. The driving information acquiring unit 22 is configured to acquire information related to driving of the motor 11. The driving information acquiring unit 22 is configured to acquire information detected by the sensor 12A. The travel distance calculating unit 23 is configured to calculate the travel distance by which the brake block 14 travels to touch the tread surface 2A of the wheel 2. The wear amount calculating unit 24 calculates the wear amount of the brake block 14 based on the currently calculated value of the travel distance and an old value of the travel distance.

The travel distance calculating unit 23 is configured to calculate the travel distance by which the brake block 14 travels from the reference position detected by the sensor 12A to a touch position where the brake block 14 can touch the tread surface 2A of the wheel 2. The reference position is referred to as a fully opened position where the brake block 14 is the farthest away from the tread surface 2A of the wheel 2. The travel distance calculating unit 23 calculates the travel distance by which the brake block 14 travels based on at least one of the product of the duration and the current of the motor 11 (i.e., the product of the value of the current flowing through the motor 11 and the period of time during which the current flows through the motor 11) or the rotational rate of the motor 11. The control unit 21 can know that the brake block 14 reaches the touch position or touches the tread surface 2A of the wheel 2, by referring to a sudden change in the value of the current flowing through the motor 11 or in the rotational rate of the motor 11. The travel distance calculating unit 23 may use a limit switch or the like to detect the touch position.

The travel distance calculating unit 23 can calculate the travel distance by which the brake block 14 travels in two different ways. The travel distance calculating unit 23 calculates, when the motor 11 is activated and after the brake block 14 is moved to the fully opened position, the travel distance by which the brake block 14 travels from the fully opened position to the touch position where the brake block 14 can touch the tread surface 2A of the wheel 2. In addition, the travel distance calculating unit 23 calculates the travel distance by which the brake block 14 travels from the touch position where the brake block 14 can touch the tread surface 2A of the wheel 2 back to the reference position.

Here, a reference distance L denotes the distance between the center of the wheel 2 and the front end of the brake block retainer 13, i.e., the portion where the brake block 14 is attached when the brake block retainer 13 and the brake block 14 are at the reference position. The reference position is the fully opened position where the brake block 14 is the farthest away from the wheel 2, i.e., the most retracted position where the brake block retainer 13 is retracted the most. The letter "r" denotes the radius of the wheel 2. The letter "A" denotes the thickness of the brake block 14. The letter "B" denotes the travel distance by which the brake block 14 travels from the reference position to the touch position where the brake block 14 can touch the tread surface 2A of the wheel 2. The letter "C" denotes the wear amount of the brake block 14.

The radius r of the wheel 2 is measured when the wheel 2 goes through wheel truing and input to the controller device 20 as information to be used for speed calculation. Here, the truing of the wheel 2 can be classified into preliminary truing and repair truing. The former is conducted every predetermined mileage and the latter is performed if any irregularity such as wheel flat is identified. The change in the radius r of the wheel 2 that is found when the wheel truing is conducted is sufficiently less than the wear amount of the brake block 14 (the change in the thickness A). This means that the change in the radius r is negligible while the change in the thickness A of the brake block 14 is monitored. The strict value of the thickness A of the brake block 14 may be obtained by taking into consideration the actually measured value of the radius r of the wheel 2 when calculating the thickness A of the brake block 14. For example, the controller device 20 includes a target member wear amount acquiring unit 25 for acquiring the wear amount of the wheel 2, which is the target member. The wear amount calculating unit 24 then uses the acquired wear amount of the wheel 2 in calculating the wear amount C of the brake block 14. When a brand-new brake block 14 is mounted on the brake block retainer 13, the thickness A of the brake block 14 is a uniquely determined value. The travel distance that is measured when the brake block 14 is mounted on the brake block retainer 13 or when the wheel 2 is trued is equivalent to an old value of the travel distance.

The wear amount calculating unit 24 calculates the thickness A of the brake block 14 according to the following equations (1) and (2), and calculates the wear amount C of the brake block 14 according to the following equation (3). The reference distance L is defined as the sum of the radius r of the wheel 2, the thickness A of the brake block 14, and the travel distance B of the brake block 14. Based on these, the thickness A of the brake block 14 can be calculated. The wear amount calculating unit 24 subtracts the calculated thickness A of the brake block 14 from the initial value A0 of the thickness of the brake block 14, thereby calculating the wear amount C of the brake block 14.

$$L = r + A + B \ ... \ (1)$$

$$A = L - r - B ... \ (2)$$

$$C = A0 - A ... \ (3)$$

The reference distance L may vary among wheels 2 for which the brake device 10 is installed. Accordingly, it is desirable to certainly know the initial value of the reference distance L by identifying the radius r, the thickness A, and the travel distance B for each brake device 10 immediately after the brake device 10 is installed. As the brake block 14 wears down, the thickness A of the brake block 14 decreases from the initial value A0, and the travel distance B increases. If the newly mounted brake block 14 is not a brand-new one, the thickness A of the brake block 14 may be stored on the controller device 20 as the minimum usable dimension. The wear amount calculating unit 24 automatically measures the travel distance B of the brake block 14 on the regular basis, for example, during the start-up inspection, daily or weekly inspection, so that the thickness A of the brake block 14 is calculated. The wear amount calculating unit 24 subtracts the calculated thickness A of the brake block 14 from the initial value A0 of the thickness of the brake block 14, thereby calculating the wear amount C of the brake block 14.

The control unit 21 compares the wear amount C of the brake block 14 against the wear amount C of the brake block 14 of any one of the other brake devices 10 on the vehicles making up the same train. If the wear amount C of the brake block 14 is greater than the wear amount C of the brake block 14 of any one of the other brake devices 10 making up the same train, the control unit 21 adjusts the braking force such that it can be less than the braking force produced by the other brake devices 10.

The brake device 10 includes an informing unit 26. The informing unit 26 is configured to inform the user of when the wear amount C of the brake block 14 becomes equal to or greater than a predetermined value. The informing unit 26 is preferably configured to provide such information in a noticeable manner during the start-up inspection, daily or weekly inspection or the like. The informing unit 26 can be a speaker outputting sound, a lamp for emitting blinking light, a display unit or the like. The informing unit 26 may be alternatively configured to output a signal to the vehicle control console 5.

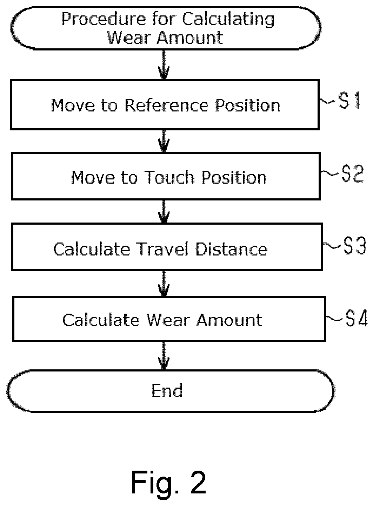

The following now describes the steps of the procedure performed by the controller device 20 to calculate the wear amount, with reference to Fig. 2. Fig. 2 shows the steps of the procedure for calculating, when the motor 11 is activated and the brake block 14 is moved to the fully opened position, the travel distance B by which the brake block 14 travels from the fully opened position to the touch position where the brake block 14 can touch the tread surface 2A of the wheel 2 and calculating the wear amount C of the brake block 14 based on the thickness A of the brake block 14.

To begin with, the controller device 20 drives the motor 11 to move the brake block 14 to the reference position (step S1). More specifically, the control unit 21 controls the driving of the motor 11 to move the brake block 14 to the reference position or the fully opened position. The control unit 21 knows that the brake block 14 has reached the fully opened position by referring to the detection made by the sensor 12A.

Following this, the controller device 20 drives the motor 11 to move the brake block 14 to the touch position (step S2). More specifically, the control unit 21 controls the driving of the motor 11 to move the brake block 14 until the brake block 14 touches the tread surface 2A of the wheel 2. The control unit 21 knows that the brake block 14 has reached the touch position by referring to a sudden change in the value of the current flowing through the motor 11 or in the rotational rate of the motor 11, or by using a limit switch or the like.

Subsequently, the controller device 20 calculates the travel distance B of the motor 11 (step S3). More specifically, the travel distance calculating unit 23 calculates the travel distance B by which the brake block 14 travels when the brake block 14 is moved from the reference position to the touch position in the step S2, based on at least one of the product of the current of the motor 11 and the duration or the rotational rate of the motor 11. The step S3 corresponds to a step of calculating a travel distance.

Subsequently, the controller device 20 calculates the wear amount C of the brake block 14 (step S4). More specifically, the wear amount calculating unit 24 calculates the thickness A of the brake block 14 according to the equation (2), using the calculated travel distance B in addition to the radius r of the wheel 2 and the reference distance L, which are stored in advance. The wear amount calculating unit 24 then subtracts the calculated thickness A of the brake block 14 from the initial value A0 of the thickness of the brake block 14, thereby calculating the wear amount C of the brake block 14. The step S4 corresponds to a step of calculating a wear amount. The calculated wear amount C of the brake block 14 can determine whether to replace the brake block 14.

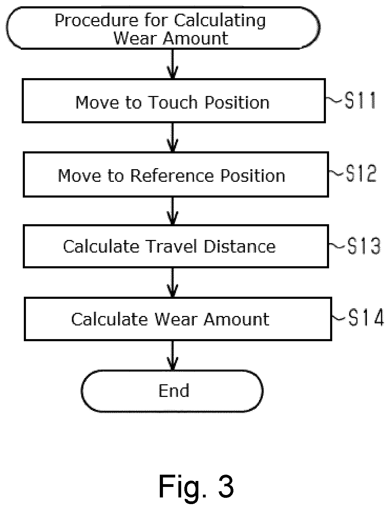

The following now describes the steps of the procedure performed by the controller device 20 to calculate the wear amount, with reference to Fig. 3. Fig. 3 shows the steps of the procedure for calculating the travel distance B by which the brake block 14 travels from the touch position where the brake block 14 can touch the tread surface 2A of the wheel 2 back to the reference position and calculating the wear amount C of the brake block 14 based on the thickness A of the brake block 14.

To begin with, the controller device 20 drives the motor 11 to move the brake block 14 to the touch position (step S11). More specifically, the control unit 21 controls the driving of the motor 11 to move the brake block 14 until the brake block 14 touches the tread surface 2A of the wheel 2. The control unit 21 knows that the brake block 14 has reached the touch position by referring to a sudden change in the value of the current flowing through the motor 11 or in the rotational rate of the motor 11, or by using a limit switch or the like.

Following this, the controller device 20 drives the motor 11 to move the brake block 14 to the reference position (step S12). More specifically, the control unit 21 controls the driving of the motor 11 to move the brake block 14 to the reference position or the fully opened position. The control unit 21 knows that the brake block 14 has reached the fully opened position by referring to the detection made by the sensor 12A.

Subsequently, the controller device 20 calculates the travel distance B of the brake block 14 (step S13). More specifically, the travel distance calculating unit 23 calculates the travel distance B of the brake block 14 when the brake block 14 is moved from the touch position to the reference position in the step S12, based on at least one of the product of the current of the motor 11 and the duration or the rotational rate of the motor 11. The step S13 corresponds to a step of calculating a travel distance.

Subsequently, the controller device 20 calculates the wear amount C of the brake block 14 (step S14). More specifically, the wear amount calculating unit 24 calculates the thickness A of the brake block 14 according to the equation (2), using the calculated travel distance B in addition to the radius r of the wheel 2 and the reference distance L, which are stored in advance. The wear amount calculating unit 24 then subtracts the calculated thickness A of the brake block 14 from the initial value A0 of the thickness of the brake block 14, thereby calculating the wear amount C of the brake block 14. The step S14 corresponds to a step of calculating a wear amount. The calculated wear amount C of the brake block 14 can determine whether to replace the brake block 14.

Advantageous effects of the first embodiment will be now described.

(1) The information regarding the driving of the motor 11 is used to calculate the travel distance B by which the brake block 14 travels to touch the tread surface 2A of the wheel 2. Accordingly, the wear amount C of the brake block 14 can be calculated by referring to the difference between the currently calculated value of the travel distance B and an old value of the travel distance of the brake block 14.

(2) Since the travel distance B by which the brake block 14 travels from the reference position to the touch position where the brake block 14 can touch the tread surface 2A of the wheel 2 is calculated, the change in the travel distance can be reliably obtained.

(3) The travel distance of the brake block 14 can be calculated by driving the brake block 14 from the fully opened position to the touch position where the brake block 14 can touch the tread surface 2A of the wheel 2.

(4) The travel distance B of the brake block 14 can be calculated based on at least one of the product of the duration and the current of the motor 11 or the rotational rate of the motor 11.

(5) The wear amount C of the brake block 14 can be accurately calculated by taking into consideration the wear amount of the wheel 2.

(6) When the brake block 14 is moved to come into contact with the tread surface 2A of the wheel 2, the braking always starts working after the same period of time.

(7) When the brake block 14 is newly mounted as a replacement, the travel distance by which the brake block 14 travels to touch the tread surface 2A of the wheel 2 is measured, and the obtained value is used as an old value of the travel distance. In this manner, the wear amount of the brake block 14 mounted as a replacement can be calculated.

(8) The informing unit 26 can help the user notice that the wear amount of the brake block 14 becomes equal to or greater than a predetermined value.

(9) If the wear amount of the brake block 14 is greater than the wear amount of the brake block 14 of any one of the other brake devices 10, the braking force is adjusted such that it can be less than the braking force of the other brake devices 10. The wear amount of the brake block 14 can be leveled among the brake devices 10, so that the worn-out brake blocks 14 can be replaced around the same time.

<Second Embodiment>

With reference to Figs. 2 to 4, the following describes a brake device relating to a second embodiment. Differently from the first embodiment, the brake device relating to the second embodiment is a disc brake device. The following description will be focused on the differences from the first embodiment.

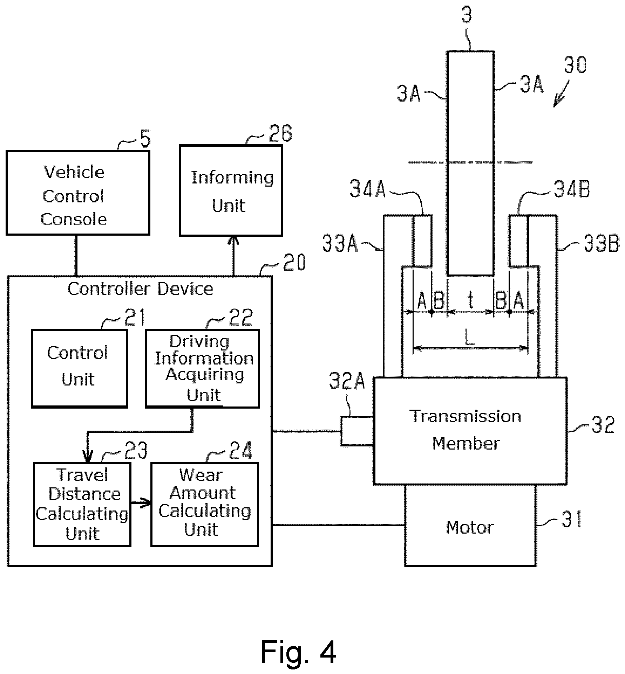

As shown in Fig. 4, a brake device 30 is a disc brake for generating a braking force by pressing brake pads 34A and 34B against a disc 3 rotating integrally with a wheel 2 of a railroad vehicle. The brake device 30 includes a rotating motor 31 and is driven by the motor 31. The brake device 30 includes a transmission member 32 for transmitting the driving force produced by the motor 31 and also includes a left arm 33A and a right arm 33B. The transmission member 32 uses the driving force from the motor 31 to displace the left and right arms 33A and 33B. The brake pad 34A is attached to the left arm 33A, and the brake pad 34B is attached to the right arm 33B. The left and right arms 33A and 33B are vertically displaced by the transmission member 32 toward side surfaces 3A of the disc 3. The brake pads 34A and 34B are displaced with the left and right arms 33A and 33B, so that the brake pads 34A and 34B are pressed against the side surfaces 3A of the disc 3. As pressed against the side surfaces 3A of the disc 3, the brake pads 34A and 34B wear out. As a result, the brake pads 34A and 34B becomes thinner. Here, the motor 31 is equivalent to an electric actuator. The disc 3 is a rotatable member and equivalent to a target member, and the brake pads 34A and 34B are equivalent to a frictional member.

The brake device 30 is controlled by a controller device 20, which is configured in the same manner as in the first embodiment. The controller device 20 controls the braking force based on a braking command from a vehicle control console 5. The controller device 20 includes a control unit 21 for controlling the brake device 30. The control unit 21 controls driving of the motor 31 such that a necessary braking force is produced. The control unit 21 controls the driving of the motor 31 such that the brake pads 34A and 34B can travel to a position at a predetermined distance from the position where they can touch the side surfaces 3A of the disc 3. In this way, the brake pads 34A and 34B come into contact with the side surfaces 3A of the disc 3 and the braking starts working within a constant period of time. The transmission member 32 is provided with a sensor 32A for detecting whether the brake pads 34A and 34B are positioned at a reference position for the travel distance of the brake pads 34A and 34B.

The controller device 20 includes a driving information acquiring unit 22, a travel distance calculating unit 23, and a wear amount calculating unit 24. The driving information acquiring unit 22 is configured to acquire information related to driving of the motor 31. The driving information acquiring unit 22 is configured to acquire information detected by the sensor 32A. The travel distance calculating unit 23 is configured to calculate the travel distance by which the brake pads 34A and 34B travel to touch the side surfaces 3A of the disc 3. The wear amount calculating unit 24 calculates the thickness of the brake pads 34A and 34B based on the currently calculated value of the travel distance and an old value of the travel distance.

The travel distance calculating unit 23 calculates the travel distance by which the brake pads 34A and 34B travel from the reference position detected by the sensor 32A to a touch position where the brake pads 34A and 34B can touch the side surface 3A of the disc 3. The reference position is referred to as a fully opened position where the brake pads 34A and 34B are the farthest away from the side surfaces 3A of the disc 3. The travel distance calculating unit 23 calculates the travel distance of the brake pads 34A and 34B based on at least one of the product of the duration and the current of the motor 31 or the rotational rate of the motor 31. The control unit 21 can know that the brake pads 34A and 34B have reached the touch position where they can touch the side surface 3A of the disc 3 by referring to a sudden change in the value of the current flowing through the motor 31 or in the rotational rate of the motor 31. The travel distance calculating unit 23 may use a limit switch or the like to detect the touch position.

The travel distance calculating unit 23 can calculate the travel distance by which the brake pads 34A and 34B travel in two different ways. The travel distance calculating unit 23 calculates, when the motor 31 is activated and after the brake pads 34A and 34B are moved to the fully opened position, the travel distance by which the brake pads 34A and 34B travel from the fully opened position to the touch position where the brake pads 34A and 34B can touch the side surface 3A of the disc 3. In addition, the travel distance calculating unit 23 calculates the travel distance by which the brake pads 34A and 34B travel from the touch position where the brake pads 34A and 34B can touch the side surfaces 3A of the disc 3 back to the reference position.

Here, a reference distance L denotes the distance between the portion of the left arm 33A to which the brake pad 34A is attached and the portion of the right arm 33B to which the brake pad 34B is attached when the left and right arms 33A and 33B and the brake pads 34A and 34B are at the reference position. The reference position is the fully opened position where the brake pads 34A and 34B are the farthest away from the side surface 3A of the disc 3, in other words, where the left and right arms 33A and 33B are the most widely opened. The letter "t" denotes the thickness of the disc 3. The letter "A" denotes the thickness of the brake pads 34A and 34B. The letter "B" denotes the travel distance by which the brake pads 34A and 34B travel from the reference position to the touch position where the brake pads 34A and 34B can touch the side surfaces 3A of the disc 3. The letter "C" denotes the wear amount of the brake pads 34A and 34B.

The thickness t of the disc 3 is stored in the controller device 20 as initial information. The change in the thickness t of the disc 3 is sufficiently less than the wear amount of the brake pads 34A and 34B (the change in the thickness A). This means that the change in the thickness t of the disc 3 is negligible while the change in the thickness A of the brake pads 34A and 34B is monitored. When brand-new brake pads 34A and 34B are mounted on the left and right arms 33A and 33B, the thickness A of the brake pads 34A and 34B is a uniquely determined value. The travel distance measured when the brake pads 34A and 34B are mounted on the left and right arms 33A and 33B is referred to as an old value of the travel distance.

The wear amount calculating unit 24 calculates the thickness A of the brake pads 34A and 34B according to the following equations (4) and (5), and calculates the wear amount C of the brake pads 34A and 34B according to the following equation (6). The reference distance L is defined as the sum of the thickness t of the disc 3, the thicknesses A of the brake pads 34A and 34B, and the travel distances B of the brake pads 34A and 34B. Based on these, the thickness A of the brake pads 34A and 34B can be calculated. The wear amount calculating unit 24 then subtracts the calculated thickness A of the brake pads 34A and 34B from the initial value A0 of the thickness of the brake pads 34A and 34B, thereby calculating the wear amount C of the brake pads 34A and 34B.

$$L = t + 2(A + B) \ldots (4)$$

$$A = (L - t - 2B)/2 \ldots (5)$$

$$C = A0 - A \ldots (6)$$

The reference distance L and the thickness t of the disc 3 are constant. The wear amount calculating unit 24 automatically measures the travel distance B of the brake pads 34A and 34B on the regular basis, for example, during the start-up inspection, daily or weekly inspection, so that the thickness A of the brake pads 34A and 34B is calculated. The wear amount calculating unit 24 subtracts the calculated thickness A of the brake pads 34A and 34B from the initial value A0 of the thickness of the brake pads 34A and 34B, thereby calculating the wear amount C of the brake pads 34A and 34B.

The control unit 21 compares the wear amount C of the brake pads 34A and 34B against the wear amount C of the brake pads 34A and 34B of any one of the other brake devices 10 on the vehicles making up the same train. If the wear amount C of the brake pads 34A and 34B is greater than the wear amount C of the brake pads 34A and 34B of any one of the other brake devices 10 making up the same train, the control unit 21 adjusts the braking force such that it can be less than the braking force of the other brake devices 10.

The brake device 30 includes an informing unit 26. The informing unit 26 is configured to issue information when the wear amount C of the brake pads 34A and 34B becomes equal to or greater than a predetermined value. The informing unit 26 is preferably configured to provide such information in a noticeable manner during the start-up inspection, daily or weekly inspection or the like. The informing unit 26 can be a speaker outputting sound, a lamp for emitting blinking light, a display unit or the like. The informing unit 26 may be alternatively configured to output a signal to the vehicle control console 5.

The following now describes the steps of the procedure performed by the controller device 20 to calculate the wear amount, with reference to Fig. 2. Fig. 2 shows the steps of the procedure for calculating, when the motor 31 is activated and after the brake pads 34A and 34B are moved to the fully opened position, the travel distance B by which the brake pads 34A and 34B travel from the fully opened position to the touch position where the brake pads 34A and 34B can touch the side surfaces 3A of the disc 3 and calculating the wear amount C of the brake pads 34A and 34B based on the thickness A of the brake pads 34A and 34B.

To begin with, the controller device 20 drives the motor 31 to move the brake pads 34A and 34B to the reference position (step S1). More specifically, the control unit 21 controls the driving of the motor 31 to move the brake pads 34A and 34B to the reference position or the fully opened position. The control unit 21 knows that the brake pads 34A and 34B have reached the fully opened position by referring to the detection made by the sensor 32A.

Following this, the controller device 20 drives the motor 31 to move the brake pads 34A and 34B to the touch position (step S2). More specifically, the control unit 21 controls the driving of the motor 31 to move the brake pads 34A and 34B until the brake pads 34A and 34B touch the side surfaces 3A of the disc 3. The control unit 21 knows that the brake pads 34A and 34B have reached the touch position by referring to a sudden change in the value of the current flowing through the motor 31 or in the rotational rate of the motor 31, or by using a limit switch or the like.

Subsequently, the controller device 20 calculates the travel distance B by the motor 31 (step S3). More specifically, the travel distance calculating unit 23 calculates the travel distance B of the brake pads 34A and 34B when the brake pads 34A and 34B are moved from the reference position to the touch position in the step S2, based on at least one of the product of the current of the motor 31 and the duration or the rotational rate of the motor 31. The step S3 corresponds to a step of calculating a travel distance.

Subsequently, the controller device 20 calculates the wear amount C of the brake pads 34A and 34B (step S4). In other words, the wear amount calculating unit 24 calculates the thickness A of the brake pads 34A and 34B according to the equation (5), using the calculated travel distance B in addition to the thickness t of the disc 3 and the reference distance L, which are stored in advance. The wear amount calculating unit 24 then subtracts the calculated thickness A of the brake pads 34A and 34B from the initial value A0 of the thickness of the brake pads 34A and 34B, thereby calculating the wear amount C of the brake pads 34A and 34B. The step S4 corresponds to a step of calculating a wear amount. The calculated wear amount C of the brake pads 34A and 34B can determine whether to replace the brake pads 34A and 34B.

The following now describes the steps of the procedure performed by the controller device 20 to calculate the wear amount, with reference to Fig. 3. Fig. 3 shows the steps of the procedure for calculating the travel distance B by which the brake pads 34A and 34B travel from the touch position where the brake pads 34A and 34B can touch the side surface 3A of the disc 3 back to the reference position and calculating the wear amount C of the brake pads 34A and 34B based on the thickness A of the brake pads 34A and 34B.

To begin with, the controller device 20 drives the motor 31 to move the brake pads 34A and 34B to the touch position (step S11). More specifically, the control unit 21 controls the driving of the motor 31 to move the brake pads 34A and 34B until the brake pads 34A and 34B touch the side surfaces 3A of the disc 3. The control unit 21 knows that the brake pads 34A and 34B have reached the touch position by referring to a sudden change in the value of the current flowing through the motor 31 or in the rotational rate of the motor 31, or by using a limit switch or the like.

Following this, the controller device 20 drives the motor 31 to move the brake pads 34A and 34B to the reference position (step S12). More specifically, the control unit 21 controls the driving of the motor 31 to move the brake pads 34A and 34B to the reference position or the fully opened position. The control unit 21 knows that the brake pads 34A and 34B have reached the fully opened position by referring to the detection made by the sensor 32A.

Subsequently, the controller device 20 calculates the travel distance B of the brake pads 34A and 34B (step S13). More specifically, the travel distance calculating unit 23 calculates the travel distance B of the brake pads 34A and 34B when the brake pads 34A and 34B are moved from the touch position back to the reference position in the step S12, based on at least one of the product of the current of the motor 31 and the duration or the rotational rate of the motor 31. The step S13 corresponds to a step of calculating a travel distance.

Subsequently, the controller device 20 calculates the wear amount C of the brake pads 34A and 34B (step S14). More specifically, the wear amount calculating unit 24 calculates the thickness A of the brake pads 34A and 34B according to the equation (5), using the calculated travel distance B in addition to the thickness t of the disc 3 and the reference distance L, which are stored in advance. The wear amount calculating unit 24 then subtracts the calculated thickness A of the brake pads 34A and 34B from the initial value A0 of the thickness of the brake pads 34A and 34B, thereby calculating the wear amount C of the brake pads 34A and 34B. The step S14 corresponds to a step of calculating a wear amount. The calculated wear amount C of the brake pads 34A and 34B can determine whether to replace the brake pads 34A and 34B.

Advantageous effects of the second embodiment will be now described.

(1) The information regarding the driving of the motor 31 is used to calculate the travel distance B by which the brake pads 34A and 34B travel to touch the disc 3. Accordingly, the wear amount C of the brake pads 34A and 34B can be calculated by referring to the difference between the currently calculated value of the travel distance B and an old value of the travel distance of the brake pads 34A and 34B.

(2) Since the travel distance B by which the brake pads 34A and 34B travel from the reference position to the touch position where the brake pads 34A and 34B can touch the disc 3 is calculated, the change in the travel distance can be reliably obtained.

(3) The travel distance of the brake pads 34A and 34B can be calculated by driving the brake pads 34A and 34B from the fully opened position to the touch position where the brake pads 34A and 34B can touch the side surfaces 3A of the disc 3.

(4) The travel distance B of the brake pads 34A and 34B can be calculated based on at least one of the product of the duration and the current of the motor 31 or the rotational rate of the motor 31.

(5) When the brake pads 34A and 34B are moved to touch the disc 3, the braking always starts working after the same period of time.

(6) When the brake pads 34A and 34B are newly mounted as a replacement, the travel distance by which the brake pads 34A and 34B travel to touch the disc 3 is measured, and the obtained value is used as an old value of the travel distance. In this manner, the wear amount of the brake pads 34A and 34B mounted as a replacement can be calculated.

(7) The informing unit 26 can help the user notice that the wear amount of the brake pads 34A and 34B becomes equal to or greater than a predetermined value.

(8) If the wear amount of the brake pads 34A and 34B is greater than the wear amount of the brake pads 34A and 34B of any one of the other brake devices 10, the braking force is adjusted such that it can be less than the braking force of the other brake devices 10. In this manner, the wear amount of the brake pads 34A and 34B can be leveled among the brake devices 10, so that the worn-out brake pads 34A and 34B can be replaced around the same time.

<Other Embodiments>

The foregoing embodiments can be modified as described below. The above embodiments and the following modifications can be implemented in combination to the extent where they are technically consistent with each other.

In the above-described embodiments, if the wear amount C of the brake pads 34A and 34B is greater than the wear amount C of the brake pads 34A and 34B of any one of the other brake devices 10 making up the same train, the braking force is adjusted such that the wear amount of the brake pads 34A and 34B can be leveled among the brake devices 10. However, the braking force may not be adjusted such that the wear amount of the brake pads 34A and 34B is leveled among the brake devices 10.

In the above-described embodiments, the brake devices 10 and 30 is provided with the informing unit 26 for issuing information when the wear amount of the frictional member becomes equal to or greater than a predetermined value. However, the embodiments may be worked without the informing unit 26.

In the above-described embodiments, if the wear amount of the frictional member is greater than the wear amount of the frictional member of any one of the other brake devices, the braking force is adjusted such that it can be less than the braking force of the other brake devices. The wear amount of the frictional member may not be necessarily compared against the wear amount of the frictional member of any one of the other brake devices unless the frictional members need to be replaced around the same time.

In the above-described embodiments, after the frictional member touches the target member to allow the control unit 21 to apply braking, the frictional member is moved to and kept stationary at the position where the frictional member is placed at a constant distance from the target member. The present invention is, however, not limited to such. After the frictional member touches the target member to allow the control unit 21 to apply braking, the frictional member may be moved back to and kept stationary at the initial position.

In the above-described embodiments, the reference position is the fully opened position, but may be a different position. In other words, after the frictional member is moved to the fully opened position, the travel distance B by which the frictional member travels from the fully opened position to the touch position where the frictional member can touch the target member is calculated. The present invention is, however, not limited to such. After the frictional member is moved to a reference position that is different from the fully opened position, the travel distance B by which the frictional member travels from the reference position to the touch position where the frictional member can touch the target member may be calculated. Alternatively, the travel distance B by which the frictional member travels may be calculated when the frictional member travels from the touch position where the frictional member can touch the target member back to the reference position that is different from the fully opened position.

In the above-described embodiments, the travel distance calculating unit 23 calculates the travel distance B of the frictional member in two different ways. The travel distance calculating unit 23 may be, however, configured to calculate the travel distance B of the frictional member in only one way.

In the above-described embodiments, the frictional member is displaced using the rotating motors 11 and 31, but the frictional member may be displaced using a linearly moving actuator and a linear actuator. In the above-described embodiments, the wear amount C of the frictional member is referred to in order to determine whether to replace the frictional member, but the thickness A of the frictional member may be alternatively referred to in order to determine whether to replace the frictional member. For example, it is determined to replace the frictional member if the thickness A of the frictional member becomes equal to or less than a predetermined value.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

According to the foregoing embodiments, a plurality of functions are distributively provided. Some or all of the functions may be integrated. Any one of the functions may be partly or entirely segmented into a plurality of functions, which are distributively provided. Irrespective of whether or not the functions are integrated or distributed, they are acceptable as long as they are configured to solve the problems.

LIST OF REFERENCE NUMBERS

[0078]

A      thickness
B      travel distance

C      wear amount
L      reference distance
r      radius
t      thickness
2      wheel (target)
2A      tread surface
3      disc (target)
3A      side surface
5      vehicle control console
10      brake device
11      motor
12      transmission member
12A      sensor
13      brake block retainer
14      brake block (frictional member)
20      controller device
21      control unit
22      driving information acquiring unit
23      travel distance calculating unit
24      wear amount calculating unit
25      target wear amount acquiring unit
26      informing unit
30      brake device
31      motor
32      transmission member
32A      sensor
33A      left arm
33B      right arm
34A      brake pad (frictional member)
34B      brake pad (frictional member)

**Claims**

1. A brake device (10, 30) for applying a brake to a vehicle provided with a target member (2, 3) by using an electric actuator (11, 31) to drive a frictional member (14, 34A, 34B) so that the frictional member (14, 34A, 34B) is pressed against the target member (2, 3), the brake device (10, 30) comprising:

   an acquiring unit (22) for acquiring driving information regarding driving of the electric actuator (11, 31);
   a travel distance calculating unit (23) for, based on the acquired driving information, calculating a travel distance by which the frictional member (14, 34A, 34B) travels to touch the target member (2, 3);
   a wear amount calculating unit (24) for calculating a wear amount (C) of the frictional member (14, 34A, 34B) based on a currently calculated value of the travel distance and an old value of the travel distance, and
   a control unit (21) for controlling driving of the electric actuator (11, 31),
   wherein the control unit (21) controls the driving of the electric actuator (11, 31) such that the frictional member (14, 34A, 34B) travels to a position that is at a predetermined distance from the position where the frictional member (14, 34A, 34B) touches the target member (2, 3), and
**characterized in that**,
when the wear amount (C) of the frictional member (14, 34A, 34B) is greater than a wear amount (C) of a frictional member of another brake device provided on another vehicle making up a same train, the control unit (21) adjusts a braking force such that the braking force is less than a braking force of the other brake device.

2. The brake device (10, 30) of claim 1, comprising

   a sensor (12A, 32A) for detecting whether the frictional member (14, 34A, 34B) is placed at a reference position for the travel distance of the frictional member (14, 34A, 34B),
   wherein the acquiring unit (22) acquires detected information from the sensor (12A, 32A), and
   wherein the travel distance calculating unit (23) calculates a travel distance by which the frictional member (14, 34A, 34B) travels from the reference position detected by the sensor (12A, 32A) to a position where the frictional member (14, 34A, 34B) touches the target member (2, 3).

3. The brake device (10, 30) of claim 2, wherein the reference position is a fully opened position where the frictional member (14, 34A, 34B) is the farthest away from the target member (2, 3).

4. The brake device (10, 30) of any one of claims 1 to 3, wherein the travel distance calculating unit (23) calculates the travel distance of the frictional member (14, 34A, 34B) based on at least one of a product of a duration and a current flowing through the electric actuator (11, 31) or a rotational rate of the electric actuator (11, 31).

5. The brake device (10, 30) of any one of claims 1 to 4, comprising

   a target member wear amount acquiring unit (25) for acquiring a wear amount of the target member (2, 3), and
   wherein the wear amount calculating unit takes the acquired wear amount of the target member (2, 3) into consideration in calculating the wear amount of the frictional member (14, 34A, 34B).

6. The brake device (10, 30) of any one of claims 1 to 5, wherein, when the frictional member (14, 34A, 34B) is newly mounted as a replacement, the brake device (10, 30) drives the frictional member (14, 34A, 34B) so that the frictional member (14, 34A, 34B) travels to touch the target member (2, 3) and acquires a travel distance by which the frictional member (14, 34A, 34B) travels, and the acquired travel distance is used as the old value of the travel distance in calculating the wear amount.

7. The brake device (10, 30) of any one of claims 1 to 6, comprising
an informing unit (26) for issuing information when the wear amount of the frictional member (14, 34A, 34B) becomes equal to or greater than a predetermined value.

8. The brake device (10, 30) of any one of claims 1 to 7, wherein the target member (2, 3) is a wheel (2) or a rotating body (3) rotatable integrally with the wheel (2).

9. A method for calculating a wear amount of a frictional member (14, 34A, 34B) of a brake device (10, 30), the brake device (10, 30) being configured to apply a brake to a vehicle provided with a target member (2, 3) by using an electric actuator (11, 31) to drive a frictional member (14, 34A, 34B) so that the frictional member (14, 34A, 34B) is pressed against the target member (2, 3), the method comprising steps of:

acquiring driving information regarding driving of the electric actuator (11, 31);
based on the acquired driving information, calculating a travel distance by which the frictional member (14, 34A, 34B) travels to touch the target member (2, 3);
calculating a wear amount of the frictional member (14, 34A, 34B) based on a currently calculated value of the travel distance and an old value of the travel distance, and
controlling driving of the electric actuator (11, 31),
wherein the control unit (21) controls the driving of the electric actuator (11, 31) such that the frictional member (14, 34A, 34B) travels to a position that is at a predetermined distance from the position where the frictional member (14, 34A, 34B) touches the target member (2, 3), and **characterized in that**,
when the wear amount of the frictional member (14, 34A, 34B) is greater than a wear amount of a frictional member of another brake device provided on another vehicle making up a same train, the control unit (21) adjusts a braking force such that the braking force is less than a braking force of the other brake device.

10. A program for calculating a wear amount of a frictional member (14, 34A, 34B) of a brake device (10, 30), the brake device (10, 30) being configured to apply a brake to a vehicle provided with a target member (2, 3) by using an electric actuator (11, 31) to drive a frictional member (14, 34A, 34B) so that the frictional member (14, 34A, 34B) is pressed against the target member (2, 3),
the program causing a computer to perform steps of:

acquiring driving information regarding driving of the electric actuator (11, 31);
based on the acquired driving information, calculating a travel distance by which the frictional member (14, 34A, 34B) travels to touch the target member (2, 3);
calculating a wear amount of the frictional member (14, 34A, 34B) based on a currently calculated value of the travel distance and an old value of the travel distance, and
controlling driving of the electric actuator (11, 31),
wherein the control unit (21) controls the driving of the electric actuator (11, 31) such that the frictional member (14, 34A, 34B) travels to a position that is at a predetermined distance from the position where the frictional member (14, 34A, 34B) touches the target member (2, 3), and **characterized in that**,
when the wear amount of the frictional member (14, 34A, 34B) is greater than a wear amount of a frictional member of another brake device provided on another vehicle making up a same train, the control unit (21) adjusts a braking force such that the braking force is less than a braking force of the other brake device.

**Patentansprüche**

1. Bremsvorrichtung (10, 30) zum Anlegen einer Bremse an einem Fahrzeug, das mit einem Zielelement (2, 3) versehen ist, unter Verwendung eines elektrischen Aktuators (11, 31) zum Antreiben eines Reibungselements (14, 34A, 34B), so dass das Reibungselement (14, 34A, 34B) gegen das Zielelement (2, 3) gedrückt wird, wobei die Bremsvorrichtung (10, 30) umfasst:

eine Erfassungseinheit (22) zum Erfassen von Antriebsinformationen bezüglich des Antriebs des elektrischen Aktuators (11, 31);
eine Wegstreckenberechnungseinheit (23) zum Berechnen einer Wegstrecke, die das Reibungselement (14, 34A, 34B) zurücklegt, um das Zielelement (2, 3) zu berühren, auf der Grundlage der erfassten Antriebsinformationen;
eine Verschleißbetrag-Berechnungseinheit (24) zum Berechnen eines Verschleißbetrags (C) des Reibungselements (14, 34A, 34B) auf der Grundlage eines aktuell berechneten Werts der Wegstrecke und eines alten Werts der Wegstrecke, und

eine Steuereinheit (21) zum Steuern des Antriebs des elektrischen Aktuators (11, 31),

wobei die Steuereinheit (21) den Antrieb des elektrischen Aktuators (11, 31) so steuert, dass das Reibungselement (14, 34A, 34B) in eine Position bewegt wird, die sich in einem vorbestimmten Abstand von der Position befindet, an der das Reibungselement (14, 34A, 34B) das Zielelement (2, 3) berührt, und

wobei, wenn der Verschleißbetrag (C) des Reibungselements (14, 34A, 34B) größer ist als ein Verschleißbetrag (C) eines Reibungselements einer anderen Bremsvorrichtung, die an einem anderen Fahrzeug vorgesehen ist, das einen gleichen Zug bildet, die Steuereinheit (21) eine Bremskraft so einstellt, dass die Bremskraft geringer ist als eine Bremskraft der anderen Bremsvorrichtung.

2. Bremsvorrichtung (10, 30) nach Anspruch 1, umfassend

einen Sensor (12A, 32A) zum Erfassen, ob das Reibungselement (14, 34A, 34B) an einer Referenzposition für die Wegstrecke des Reibungselements (14, 34A, 34B) angeordnet ist, wobei die Erfassungseinheit (22) erfasste Informationen von dem Sensor (12A, 32A) erfasst, und

wobei die Wegstreckenberechnungseinheit (23) eine Wegstrecke berechnet, die das Reibungselement (14, 34A, 34B) von der durch den Sensor (12A, 32A) erfassten Referenzposition zu einer Position zurücklegt, an der das Reibungselement (14, 34A, 34B) das Zielelement (2, 3) berührt.

3. Bremsvorrichtung (10, 30) nach Anspruch 2, wobei die Referenzposition eine vollständig geöffnete Position ist, in der das Reibungselement (14, 34A, 34B) am weitesten vom Zielelement (2, 3) entfernt ist.

4. Bremsvorrichtung (10, 30) nach einem der Ansprüche 1 bis 3, wobei die Wegstreckenberechnungseinheit (23) die Wegstrecke des Reibungselements (14, 34A, 34B) auf der Grundlage eines Produkts einer Dauer und eines durch den elektrischen Aktuator (11, 31) fließenden Stroms und/oder einer Drehgeschwindigkeit des elektrischen Aktuators (11, 31) berechnet.

5. Bremsvorrichtung (10, 30) nach einem der Ansprüche 1 bis 4, umfassend

eine Erfassungseinheit (25) für den Verschleißbetrag eines Zielelements zum Erfassen eines Verschleißbetrags des Zielelements (2, 3), und

wobei die Verschleißbetrag-Berechnungseinheit den erfassten Verschleißbetrag des Zielelements (2, 3) bei der Berechnung des Verschleißbetrags des Reibungselements (14, 34A, 34B) berücksichtigt.

6. Bremsvorrichtung (10, 30) nach einem der Ansprüche 1 bis 5, wobei die Bremsvorrichtung (10, 30) das Reibungselement (14, 34A, 34B) antreibt, wenn das Reibungselement (14, 34A, 34B) als Ersatz neu montiert wird, so, dass das Reibungselement (14, 34A, 34B) sich bewegt, um das Zielelement (2, 3) zu berühren, und eine Wegstrecke zurücklegt, um die sich das Reibungselement (14, 34A, 34B) bewegt, und die erfasste Wegstrecke als der alte Wert der Wegstrecke bei der Berechnung des Verschleißbetrags verwendet wird.

7. Bremsvorrichtung (10, 30) nach einem der Ansprüche 1 bis 6, umfassend

eine Informationseinheit (26) zum Ausgeben von Informationen, wenn der Verschleißbetrag des Reibungselements (14, 34A, 34B) gleich oder größer als ein vorbestimmter Wert wird.

8. Bremsvorrichtung (10, 30) nach einem der Ansprüche 1 bis 7, wobei das Zielelement (2, 3) ein Rad (2) oder ein drehbarer Körper (3) ist, der zusammen mit dem Rad (2) drehbar ist.

9. Verfahren zum Berechnen eines Verschleißbetrags eines Reibungselements (14, 34A, 34B) einer Bremsvorrichtung (10, 30), wobei die Bremsvorrichtung (10, 30) so konfiguriert ist, dass sie eine Bremse auf ein Fahrzeug ausübt, das mit einem Zielelement (2, 3) ausgebildet ist, indem ein elektrischer Aktuator (11, 31) verwendet wird, um ein Reibungselement (14, 34A, 34B) so anzutreiben, dass das Reibungselement (14, 34A, 34B) gegen das Zielelement (2, 3) gedrückt wird, wobei das Verfahren die folgenden Schritte umfasst:

Erfassen von Antriebsinformationen bezüglich des Antriebs des elektrischen Aktuators (11, 31);

Berechnen einer Wegstrecke, über die sich das Reibungselement (14, 34A, 34B) bewegt, um das Zielelement (2, 3) zu berühren, auf der Grundlage der erfassten Antriebsinformationen;

Berechnen eines Verschleißbetrags des Reibungselements (14, 34A, 34B) auf der Grundlage eines aktuell berechneten Werts der Wegstrecke und eines alten Werts der Wegstrecke und

Steuern des Antriebs des elektrischen Aktuators (11, 31),

wobei die Steuereinheit (21) den Antrieb des elektrischen Aktuators (11, 31) so steuert, dass das Reibungselement (14, 34A, 34B) in eine Position bewegt wird, die sich in einem vorgegebenen Abstand von der Position befindet, an der das Reibungselement (14, 34A, 34B) das Zielelement (2, 3) berührt, und

wobei, wenn der Verschleißbetrag des Reibungselements (14, 34A, 34B) größer ist als ein Verschleißbetrag eines Reibungselements einer anderen Bremsvorrichtung, die an einem anderen Fahrzeug vorgesehen ist, das einen gleichen Zug bildet, die Steuereinheit (21) eine Bremskraft so einstellt, dass die Bremskraft geringer ist als eine Bremskraft der anderen Bremsvorrichtung.

10. Programm zum Berechnen eines Verschleißbetrags eines Reibungselements (14, 34A, 34B) einer Bremsvorrichtung (10, 30), wobei die Bremsvorrichtung (10, 30) so konfiguriert ist, dass sie eine Bremse auf ein Fahrzeug ausübt, das mit einem Zielelement (2, 3) ausgebildet ist, indem ein elektrischer Aktuator (11, 31) verwendet wird, um ein Reibungselement (14, 34A, 34B) so anzutreiben, dass das Reibungselement (14, 34A, 34B) gegen das Zielelement (2, 3) gedrückt wird,

wobei das Programm einen Computer veranlasst, die folgenden Schritte auszuführen:

Erfassen von Antriebsinformationen bezüglich des Antriebs des elektrischen Aktuators (11, 31);

Berechnen einer Wegstrecke, über die sich das Reibungselement (14, 34A, 34B) bewegt, um das Zielelement (2, 3) zu berühren, auf der Grundlage der erfassten Antriebsinformationen;

Berechnen eines Verschleißbetrags des Reibungselements (14, 34A, 34B) auf der Grundlage eines aktuell berechneten Werts der Wegstrecke und eines alten Werts der Wegstrecke und

Steuern des Antriebs des elektrischen Aktuators (11, 31),

wobei die Steuereinheit (21) den Antrieb des elektrischen Aktuators (11, 31) so steuert, dass sich das Reibungselement (14, 34A, 34B) in eine Position bewegt, die sich in einem vorgegebenen Abstand von der Position befindet, an der das Reibungselement (14, 34A, 34B) das Zielelement (2, 3) berührt, und

wobei, wenn der Verschleißbetrag des Reibungselements (14, 34A, 34B) größer ist als ein Verschleißbetrag eines Reibungselements einer anderen Bremsvorrichtung, die an einem anderen Fahrzeug vorgesehen ist, das einen gleichen Zug bildet, die Steuereinheit (21) eine Bremskraft so einstellt, dass die Bremskraft geringer ist als eine Bremskraft der anderen Bremsvorrichtung.

## Revendications

1. Dispositif de freinage (10, 30) permettant d'appliquer un frein à un véhicule pourvu d'un élément cible (2, 3) en utilisant un actionneur électrique (11, 31) pour entraîner un élément de friction (14, 34A, 34B) de sorte que l'élément de friction (14, 34A, 34B) soit pressé contre l'élément cible (2, 3), le dispositif de freinage (10, 30) comprenant :

une unité d'acquisition (22) pour acquérir des informations d'entraînement concernant l'entraînement de l'actionneur électrique (11, 31) ; une unité de calcul de distance de déplacement (23) pour calculer, sur la base des informations d'entraînement acquises, une distance de déplacement sur laquelle l'élément de friction (14, 34A, 34B) se déplace pour toucher l'élément cible (2, 3) ; une unité de calcul de quantité d'usure (24) pour calculer une quantité d'usure (C) de l'élément de friction (14, 34A, 34B) sur la base d'une valeur actuellement calculée de la distance de déplacement et d'une ancienne valeur de la distance de déplacement, et une unité de commande (21) pour commander l'entraînement de l'actionneur électrique (11, 31), dans lequel l'unité de commande (21) commande l'entraînement de l'actionneur électrique (11, 31) de sorte que l'élément de friction (14, 34A, 34B) se déplace vers une position qui est à une distance prédéterminée de la position où l'élément de friction (14, 34A, 34B) touche l'élément cible (2, 3), et **caractérisé en ce que**, lorsque la quantité d'usure (C) de l'élément de friction (14, 34A, 34B) est supérieure à une quantité d'usure (C) d'un élément de friction d'un autre dispositif de freinage prévu sur un autre véhicule constituant un même train, l'unité de commande (21) ajuste une force de freinage de sorte que la force de freinage soit inférieure à une force de freinage de l'autre dispositif de freinage.

2. Dispositif de freinage (10, 30) de la revendication 1, comprenant

un capteur (12A, 32A) pour détecter si l'élément de friction (14, 34A, 34B) est placé à une position de référence pour la distance de déplacement de l'élément de friction (14, 34A, 34B), dans lequel l'unité d'acquisition (22) acquiert des informations détectées à partir du capteur (12A, 32A), et

dans lequel l'unité de calcul de distance de déplacement (23) calcule une distance de déplacement sur laquelle l'élément de friction (14, 34A, 34B) se déplace de la position de référence détectée par le capteur (12A, 32A) à une position où l'élément de friction (14, 34A, 34B) touche l'élément cible (2, 3).

3. Dispositif de freinage (10, 30) de la revendication 2, dans lequel la position de référence est une position entièrement ouverte dans laquelle l'élément de friction (14, 34A, 34B) est le plus éloigné de l'élément cible (2, 3).

4. Dispositif de freinage (10, 30) de l'une quelconque des revendications 1 à 3, dans lequel l'unité de calcul de distance de déplacement (23) calcule la distance de déplacement de l'élément de friction (14, 34A, 34B) sur la base d'au moins l'un d'un produit d'une durée et d'un courant circulant à travers l'actionneur électrique (11, 31) ou d'une vitesse de rotation de l'actionneur électrique (11, 31).

5. Dispositif de freinage (10, 30) de l'une quelconque des revendications 1 à 4, comprenant

une unité d'acquisition de quantité d'usure d'élément cible (25) pour acquérir une quantité d'usure de l'élément cible (2, 3), et
dans lequel l'unité de calcul de quantité d'usure prend en compte la quantité d'usure acquise de l'élément cible (2, 3) pour calculer la quantité d'usure de l'élément de friction (14, 34A, 34B).

6. Dispositif de freinage (10, 30) de l'une quelconque des revendications 1 à 5, dans lequel, lorsque l'élément de friction (14, 34A, 34B) est nouvellement monté en remplacement, le dispositif de freinage (10, 30) entraîne l'élément de friction (14, 34A, 34B) de sorte que l'élément de friction (14, 34A, 34B) se déplace pour toucher l'élément cible (2, 3) et acquiert une distance de déplacement sur laquelle l'élément de friction (14, 34A, 34B) se déplace, et la distance de déplacement acquise est utilisée comme ancienne valeur de la distance de déplacement dans le calcul de la quantité d'usure.

7. Dispositif de freinage (10, 30) de l'une quelconque des revendications 1 à 6, comprenant une unité d'information (26) pour émettre des informations lorsque la quantité d'usure de l'élément de friction (14, 34A, 34B) devient supérieure ou égale à une valeur prédéterminée.

8. Dispositif de freinage (10, 30) de l'une quelconque des revendications 1 à 7, dans lequel l'élément cible (2, 3) est une roue (2) ou un corps rotatif (3) pouvant tourner d'un seul tenant avec la roue (2).

9. Procédé de calcul d'une quantité d'usure d'un élément de friction (14, 34A, 34B) d'un dispositif de freinage (10, 30), le dispositif de freinage (10, 30) étant configuré pour appliquer un frein à un véhicule pourvu d'un élément cible (2, 3) en utilisant un actionneur électrique (11, 31) pour entraîner un élément de friction (14, 34A, 34B) de sorte que l'élément de friction (14, 34A, 34B) soit pressé contre l'élément cible (2, 3), le procédé comprenant les étapes consistant à :

acquérir des informations d'entraînement concernant l'entraînement de l'actionneur électrique (11, 31) ;
sur la base des informations d'entraînement acquises, calculer une distance de déplacement sur laquelle l'élément de friction (14, 34A, 34B) se déplace pour toucher l'élément cible (2, 3) ;
calculer une quantité d'usure de l'élément de friction (14, 34A, 34B) sur la base d'une valeur actuellement calculée de la distance de déplacement et d'une ancienne valeur de la distance de déplacement, et
commander l'entraînement de l'actionneur électrique (11, 31),
dans lequel l'unité de commande (21) commande l'entraînement de l'actionneur électrique (11, 31) de sorte que l'élément de friction (14, 34A, 34B) se déplace vers une position qui est à une distance prédéterminée de la position où l'élément de friction (14, 34A, 34B) touche l'élément cible (2, 3), et
**caractérisé en ce que**,
lorsque la quantité d'usure de l'élément de friction (14, 34A, 34B) est supérieure à une quantité d'usure d'un élément de friction d'un autre dispositif de freinage prévu sur un autre véhicule constituant un même train, l'unité de commande (21) ajuste une force de freinage de sorte que la force de freinage soit inférieure à une force de freinage de l'autre dispositif de freinage.

10. Programme de calcul d'une quantité d'usure d'un élément de friction (14, 34A, 34B) d'un dispositif de freinage (10, 30), le dispositif de freinage (10, 30) étant configuré pour appliquer un frein à un véhicule pourvu d'un élément cible (2, 3) en utilisant un actionneur électrique (11, 31) pour entraîner un élément de friction (14, 34A, 34B) de sorte que l'élément de friction (14, 34A, 34B) soit pressé contre l'élément cible (2, 3),

le programme amenant un ordinateur à effectuer les étapes consistant à :

acquérir des informations d'entraînement concernant l'entraînement de l'actionneur électrique (11, 31) ;

sur la base des informations d'entraînement acquises, calculer une distance de déplacement sur laquelle l'élément de friction (14, 34A, 34B) se déplace pour toucher l'élément cible (2, 3) ;

calculer une quantité d'usure de l'élément de friction (14, 34A, 34B) sur la base d'une valeur actuellement calculée de la distance de déplacement et d'une ancienne valeur de la distance de déplacement, et

commander l'entraînement de l'actionneur électrique (11, 31),

dans lequel l'unité de commande (21) commande l'entraînement de l'actionneur électrique (11, 31) de sorte que l'élément de friction (14, 34A, 34B) se déplace vers une position qui est à une distance prédéterminée de la position où l'élément de friction (14, 34A, 34B) touche l'élément cible (2, 3), et

**caractérisé en ce que**,

lorsque la quantité d'usure de l'élément de friction (14, 34A, 34B) est supérieure à une quantité d'usure d'un élément de friction d'un autre dispositif de freinage prévu sur un autre véhicule constituant un même train, l'unité de commande (21) ajuste une force de freinage de sorte que la force de freinage soit inférieure à une force de freinage de l'autre dispositif de freinage.

Fig. 1

EP 4 067 181 B1

```
┌─────────────────────────────┐
│    Procedure for Calculating │
│        Wear Amount           │
└─────────────────────────────┘
              │
              ▼
┌─────────────────────────────┐
│   Move to Reference Position │ ~S1
└─────────────────────────────┘
              │
              ▼
┌─────────────────────────────┐
│     Move to Touch Position   │ ~S2
└─────────────────────────────┘
              │
              ▼
┌─────────────────────────────┐
│    Calculate Travel Distance │ ~S3
└─────────────────────────────┘
              │
              ▼
┌─────────────────────────────┐
│     Calculate Wear Amount    │ ~S4
└─────────────────────────────┘
              │
              ▼
┌─────────────────────────────┐
│             End              │
└─────────────────────────────┘
```

Fig. 2

Procedure for Calculating
Wear Amount

Move to Touch Position ~S11

Move to Reference Position ~S12

Calculate Travel Distance ~S13

Calculate Wear Amount ~S14

End

# Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008019893 A
- US 2020166096 A